# EUROPÄISCHE PATENTSCHRIFT

(11) **EP 0 755 813 B1**
(45) Veröffentlichungstag und Bekanntmachung des Hinweises auf die Patenterteilung: **29.03.2000**
(21) Anmeldenummer: 96108383.9
(22) Anmeldetag: 25.05.1996
(51) Int. Cl.: B60J 1/18

(54) **Anordnung zur Befestigung einer Fensterscheibe in einem flexiblen Verdeck oder dgl.**
Fixing arrangement of window sheet to a flexible top
Dispositif de fixation d'une vitre à une capote pliable

(30) Priorität: 25.07.1995 DE 29512019 U
(43) Veröffentlichungstag der Anmeldung: 29.01.1997
(73) Patentinhaber: Wilhelm Karmann GmbH, D-49084 Osnabrück (DE)
(72) Erfinder: Dilge Jörg, 49084 Osnabrück (DE); Vor der Strasse, Friedrich, 49134 Bissendorf (DE)
(74) Vertreter: Busse & Busse Patentanwälte

(56) Entgegenhaltungen:
- EP-A- 0 294 598
- EP-A- 0 372 375
- EP-A- 0 480 352
- DE-A- 2 917 105
- DE-U- 9 306 462
- US-A- 4 693 509

## Beschreibung

Die Erfindung bezieht sich auf eine Anordnung zur Befestigung einer Fensterscheibe gemäß dem Oberbegriff des Anspruches 1.

Aus der DE-U- 93 06 462 ist eine in das Faltverdeck eines Cabriolet-Fahrzeuges einfügbare Heckfensterscheibe aus Festglas bekannt, die mit einem auf ihrem Randbereich aufgebrachten Profilstrang versehen ist, der mit der Verdeckbespannung mittels Hochfrequenzschweißung fest verbindbar ist. Hierdurch kann auf einen zusätzlichen Verstärkungsrahmen verzichtet werden, der aufgrund seiner Sperrigkeit nur ein räumlich eingeschränktes Ablegen des Verdeckpakets ermöglicht. In der Praxis ist es jedoch oft relativ schwierig, den Profilstrang derart mit dem Verdeck zu verbinden, daß dieses im geschlossenen Zustand unter einer hinreichenden Spannung steht. Darüber hinaus müssen die Heckscheibenöffnung im Verdeck sowie die Fensterscheibe mit dem umlaufenden Profilstrang sehr exakt gearbeitet sein, um eine paßgenaue Anbringung zu ermöglichen.

Aufgabe der Erfindung ist es dementsprechend, eine Anordnung für die Befestigung einer Fensterscheibe in einem flexiblen Verdeck zu schaffen, die mit einfachen Mitteln eine hinreichende Spannung des Verdecks, der Zelt- oder Abdeckplane oder dgl. zeigt und darüber hinaus einen Toleranzausgleich ermöglicht.

Zur Lösung dieser Aufgabe zeichnet sich die erfindungsgemäße Anordnung durch die im Anspruch 1 angegebenen Merkmale aus. In den Ansprüchen 2 bis 10 sind vorteilhafte Ausgestaltungen der Erfindung angegeben.

Durch die Einarbeitung eines Schrumpfmaterial-Zwischenteils in das Verbindungselement, das durch Wärmeeinwirkung in seiner Ausdehnung einschrumpfbar ist, kann mit einfachen Mitteln eine ausreichende Spannung des flexiblen Verdecks erzeugt werden. Nach dem Einsetzen der Fensterscheibe in das flexible Verdeck wird das Schrumpfmatierial so lange erwärmt, bis es sich auf das gewünschte Maß zusammengezogen hat und das Verdeck ausreichend gespannt ist. Besteht die Fensterscheibe aus einem Kunststoffmaterial, so wird auch diese unter Spannung gesetzt. Da durch die Wahl der Zeitdauer der Wärmeeinwirkung das Ausmaß der Schrumpfung bestimmt werden kann, ist ein etwa erforderlicher Toleranzausgleich möglich.

Vorteilhafterweise ist vorgesehen, daß das Schrumpfmaterial-Zwischenteil des Verbindungselementes als ein die Fensterscheibe umlaufend umgrenzender Streifen ausgebildet ist, so daß eine gleichmäßige Spannungserzeugung ermöglicht ist.

Weitere Einzelheiten und Vorteile der Erfindung ergeben sich aus der nachfolgenden Beschreibung und der Zeichnung eines Ausführungsbeispiels. In der Zeichnung zeigen:
- Fig. 1: eine vereinfachte Rückansicht eines Fahrzeugs mit einem Cabriolet-Verdeck;
- Fig. 2: einen Schnitt nach Linie A - A in Fig. 1.

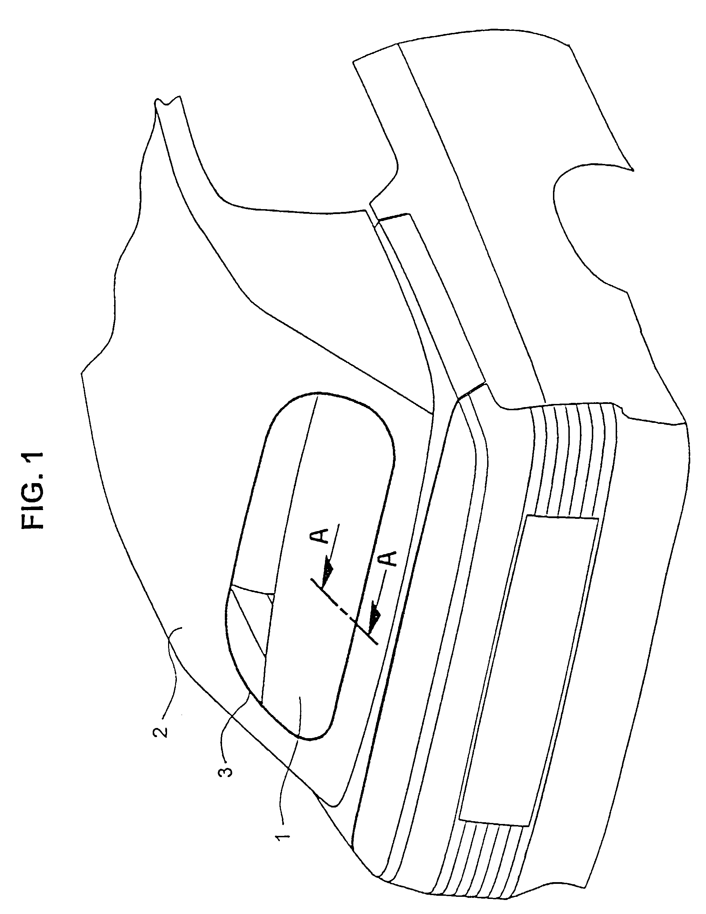

Fig. 1 zeigt eine Heck- bzw. Fensterscheibe 1 im Faltverdeck 2 eines Cabriolet-Fahrzeugs. Die Heckscheibe 1 ist mittels eines ihren Rand umgrenzenden Verbindungselementes 3 mit dem Verdeck 2 verbunden.

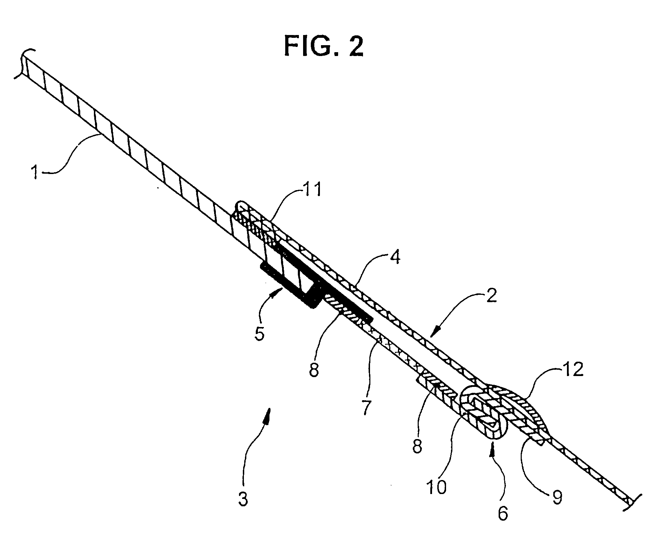

Wie Fig. 2 zeigt, ist das Verbindungselement 3 einerseits mit der Fensterscheibe 1 und andererseits mit dem Verdeckstoff 4 des Verdecks 2 verbunden. Vorteilhafterweise besteht das Verbindungselement 3 aus zwei Kunststoffprofilsträngen 5, 6, wobei der erste Kunststoffprofilstrang 5 die Heckscheibe 1 randseitig umgreift, während der zweite Kunststoffprofilstrang 6 mit dem Verdeckstoff 4 verbunden ist. Zwischen den beiden Kunststoffprofilsträngen 5, 6 ist ein Schrumpfmaterial*-Zwischenteil 7 angeordnet. Die zweiteilige Ausbildung des Verbindungselementes 3 ermöglicht die Anbringung des Schrumpfmaterial-Teils 7 zwischen den beiden Profilsträngen 5,6, z.B. durch Aufnähen oder durch HF-Schweißen. Wird eine Befestigung mittels HF-Schweißung durchgeführt, so sind hierzu zweckmäßig Filzstreifen 8 vorgesehen, die beidseits an dem Schrumpfmaterial-Teil 7 befestigt sind und dessen Verbindung mit den beiden Kunststoffprofilsträngen 5, 6 ermöglichen.
* z.B. EPDM-Schrumpfmaterial gemäß DIN-ISO 1629 (Ethylen - Propylen - Dien-Monomer)

Der zweite Kunststoffprofilstrang 6 kann zweiteilig aus zwei gegenseitig ineinandergreifenden, lösbar aneinander festlegbaren Verhakungsprofilsträngen 9, 10 ausgebildet sein. Der Verhakungsprofilstrang 9 ist mit dem Verdeckstoff 4 durch Klebung, HF-Schweißung oder Aufnähen fest verbunden, während der Verhakungsprofilstrang 10 mit dem Schrumpfmaterial-Teil 7 und somit über den Profilstrang 5 mit der Fensterscheibe 1 verbunden ist.

Um die Fensterscheibe 1 mit dem umgebenden Verbindungselement 3 in das Faltverdeck 2 einzusetzen, werden zunächst die beiden Verhakungsprofilstränge 9, 10 aneinander festgelegt. Dies ist relativ leichtgängig und einfach handhabbar möglich, da die erforderliche Spannung erst nachträglich auf den Verdeckstoff 4 aufgebracht wird. Hierzu wird das Schrumpfmaterial-Teil 7 nach dem Einhaken der beiden Verhakungsprofilstränge 9, 10 mittels eines Föns oder dgl. solange erwärmt, bis es sich auf das gewünschte Maß zusammen gezogen hat. Hierdurch werden der Verdeckstoff 2 und damit auch die beiden formschlüssig ineinandergreifenden Verhakungsprofilstränge 9, 10 unter Spannung gesetzt, so daß die Anbindung der Heckscheibe 1 an das Verdeck 2 eine hohe Festigkeit erhält und daher die Gefahr, daß die beiden miteinander verbundenen Profilstränge 9, 10 sich wieder voneinander lösen können, minimiert ist.

Kommt es jedoch zu einer Beschädigung der Fensterscheibe 1 des Cabriolets, so ist ein Austausch der Scheibe 1 in diesem Ausführungsbeispiel relativ einfach möglich, da lediglich die beiden Verhakungsprofilstränge 9, 10, deren Spannung durch die zerstörte Scheibe 1 gelöst bzw. gelockert ist, voneinander getrennt werden müssen. Nunmehr kann eine neue Scheibe 1 mit einem sie umgebenden Verbindungselement 3 in den Verhakungsprofilstrang 9 eingesetzt und durch passende Schrumpfung des Schrumpfmaterials-Teils 7 ein paßgenauer Einbau der neuen Heckscheibe 1 in das Faltverdeck 2 des Cabriolets erreicht werden.

Neben dem in der Zeichnung dargestellten Ausführungsbeispiel kann allerdings auch vorgesehen sein, den Kunststoffprofilstrang 6 einteilig auszubilden. Beim Einsetzen der Fensterscheibe 1 mit dem umgebenden Verbindungselement 3 in das Verdeck 2 wird der Kunststoffprofilstrang 6 mit dem Verdeckstoff 4 beispielsweise mittels HF-Schweißung direkt verbunden. Anschließend wird durch Schrumpfung des Schrumpfmaterial-Teils 7 das Verdeck 2 unter Spannung gesetzt. Diese Variante ist insbesondere bei solchen Fensterscheiben vorteilhaft, bei denen ein Wechsel der Scheibe 1 nur selten in Betracht kommt .

Wie Fig. 2 zeigt, ist der Verbindungsbereich des Profilstrang 6 mit dem Verdeckstoff 4 von der die Fensteröffnung umgrenzenden Kante 11 des Verdecks 2 beabstandet angeordnet. Um ein Flattern des Verdeckstoffs 4 zu verhindern, ist daher die Kante 11 vorteilhaft mit der Fensterscheibe 1 verklebt. Außerdem ist hierdurch, insbesondere bei einer zweiteiligen Ausbildung des Kunststoffprofilstrangs 6, eine Abdichtung der Heckscheibe 1 gegen Feuchtigkeit und Regenwasser gewährleistet. Durch Aufschneiden der Klebeverbindung oder durch chemisches Lösen kann die Fensterscheibe 1 wieder von dem Verdeckstoff 4 getrennt werden, falls ein Wechsel der Fensterscheibe dies einmal erforderlich machen sollte.

Desweiteren kann eine Applizierungsschweißung 12 vorgesehen sein, um die Schweißnaht zur Anbringung des Kunststoffprofilstranges 6 an dem Verdeckstoff 4 zu kaschieren. Bei einer Anbindung des Verbindungsprofilstrangs 9 durch Aufnähen auf den Verdeckstoff 4 ist darüber hinaus eine wasserdichte Abdichtung des Verdeckstoffs 4 ermöglicht. Außerdem kann eine derartige Schweißung 12 für das optische Erscheinungsbild des Heckbereichs eines Cabriolets interessant sein.

Durch den Einsatz eines Schrumpfmaterial-Zwischenteils in dem Verbindungselement zur Befestigung einer Fensterscheibe aus Glas oder Kunststoff in einem Verdeck, einer Zelt- oder Abdeckplane, einer Persenning oder dgl. kann mit einfachen Mitteln der gewünschte Spannungszustand des jeweiligen Verdecks oder der Plane im Umgebungsbereich der Scheibe erreicht werden. Darüber hinaus ist durch die in gewissen Grenzen wählbare Schrumpfung des Schrumpfmaterial-Teils ein Toleranzausgleich gegeben. Darüber hinaus ermöglicht das Schrumpfmaterial-Teils ein leichtgängiges Einsetzen der Fensterscheibe, wenn das Verbindungselement zwei gegenseitig ineinander greifende Verhakungsprofilstränge umfaßt, die zunächst nur lose miteinander verzahnt sind und erst durch die Erwärmung des Schrumpfmaterials unter Spannung gesetzt werden.

## Patentansprüche

1. Anordnung zur Befestigung einer Fensterscheibe (1) in einem flexiblen Spannverdeck (2), in einer Zelt- oder Abdeckplane, einer Persenning oder dgl., insbesondere für das Heckfenster im Faltverdeck eines Cabriolets, mit einem umlaufend auf den Randbereich der Fensterscheibe (1) aufgebrachten Verbindungselement (3), durch das die Fensterscheibe (1) mit dem Verdeck (2) fest verbindbar ist, **dadurch gekennzeichnet**, daß das Verbindungselement (3) zumindest bereichsweise ein durch Wärmeeinwirkung in seiner Ausdehnung veränderbares Schrumpfmaterial-Zwischenteil (7) aufweist.

2. Anordnung nach Anspruch 1, dadurch gekennzeichnet, daß das Schrumpfmaterial-Zwischenteil (7) des Verbindungselementes (3) als ein die Fensterscheibe (1) umlaufend umgrenzender Streifen ausgebildet ist.

3. Anordnung nach Anspruch 1 oder 2, dadurch gekennzeichnet, daß das Verbindungselement (3) einen ersten Kunststoffprofilstrang (5), der die Fensterscheibe randseitig umgreift, und einen zweiten Kunststoffprofilstrang (6), der mit dem Verdeck (2) fest verbindbar ist, aufweist, und daß das Schrumpfmaterial-Zwischenteil (7) zwischen dem ersten und dem zweiten Kunststoffprofilstrang (5, 6) angeordnet ist.

4. Anordnung nach Anspruch 3, dadurch gekennzeichnet, daß das Schrumpfmaterial-Zwischenteil (7) an die beiden Kunststoffprofilstränge (5, 6) jeweils angenäht ist.

5. Anordnung nach Anspruch 3, dadurch gekennzeichnet, daß das Schrumpfmaterial-Zwischenteil (7) mittels Filzstreifen (8) mit den beiden Kunststoffprofilsträngen (5, 6) jeweils HF-verschweißt ist.

6. Anordnung nach einem der Ansprüche 3 bis 5, dadurch gekennzeichnet, daß der zweite Kunststoffprofilstrang (6) aus zwei gegenseitig ineinandergreifenden, lösbar aneinander festlegbaren Verhakungsprofilsträngen (9, 10) besteht, wobei der erste Verhakungsprofilstrang (9) mit einem Verdeckstoff (4) und der zweite Verhakungsprofilstrang (10) mit dem Schrumpfmaterial-Zwischenteil (7) fest verbunden ist.

7. Anordnung nach Anspruch 6, dadurch gekennzeichnet, daß der erste Verhakungsprofilstrang (9) mittels HF-Schweißung mit dem Verdeckstoff (4) verbunden ist.

8. Anordnung nach Anspruch 6, dadurch gekennzeichnet, daß der erste Verhakungsprofilstrang (9) mit dem Verdeckstoff (4) vernäht ist.

9. Anordnung nach Anspruch 7 oder 8, dadurch gekennzeichnet, daß am Verdeckstoff (4) oberseitig des Verbindungsbereichs eine Applizierungsschweißung (12) angebracht ist.

10. Anordnung nach einem der Ansprüche 1 bis 9, dadurch gekennzeichnet, daß die eine Fensteröffnung umgrenzende Kante (11) des Verdeckstoffs (4) mit der Fensterscheibe (1) verklebt ist.

## Claims

1. An arrangement for fixing a window pane (1) in a flexible tensioned top, in a tent awning or tarpaulin, sail or the like, particularly for the rear window in the folding top of a cabriolet, and with, fitted around the marginal part of the window pane (1), a connecting element (3) by which the window pane (1) can be rigidly connected to the top (2), characterised in that at least portions of the connecting element (3) have an intermediate part (7) of shrunk material which expands variably due to the effect of heat.

2. An arrangement according to claim 1, characterised in that the shrunk material intermediate part (7) of the connecting element (3) is constructed as a strip which encircles the window pane (1).

3. An arrangement according to claim 1 or 2, characterised in that the connecting element (3) comprises a first profiled synthetic plastics rod (5) which engages around the edges of the window pane, and a second profiled synthetic plastics rod (6) which can be rigidly connected to the top (2) and in that the intermediate part (7) of shrunk material is disposed between the first and the second profiled synthetic plastics rods (5, 6).

4. An arrangement according to claim 3, characterised in that the shrunk material intermediate part (7) is stitched to each of the two profiled synthetic plastics rods (5, 6).

5. An arrangement according to claim 3, characterised in that the shrunk material intermediate part (7) is, by means of felt strips (8), welded by high frequency to each of the two profiled synthetic plastics rods (5, 6).

6. An arrangement according to one of claims 3 to 5, characterised in that the second profiled synthetic plastics rod (6) consists of two inter-engaging hookwisely engaging profiled rods (9, 10) adapted to be fixed to each other in separable manner, whereby the first hook-shaped profiled rod (9) is rigidly connected to a top material (4) while the second hook-shaped profiled rod (10) is rigidly connected to the shrunk material intermediate part (7).

7. An arrangement according to claim 6, characterised in that the first hook-shaped profiled rod (9) is connected to the top material (4) by high frequency welding.

8. An arrangement according to claim 6, characterised in that the first hook-shaped profiled rod (9) is stitched to the top material (4).

9. An arrangement according to claim 7 or 8, characterised in that an application weld (12) is applied to the upper surface of the connecting part of the top material (4).

10. An arrangement according to one of claims 1 to 9, characterised in that that edge (11) of the top material (4) which encircles a window opening is fixed to the window pane (1) by adhesion.

## Revendications

1. Dispositif pour fixer une vitre de fenêtre (1) dans une capote tendue (2) flexible, dans une toile de tente ou une bâche de couverture, une toile de voile ou objet analogue, en particulier dans la fenêtre arrière de la capote d'un cabriolet, en utilisant un élément de liaison (3) monté périphériquement sur le bord de la vitre (1) pour relier solidement celle-ci à la capote (1),
caractérisé en ce que
l'élément de liaison (3) présente, au moins localement, une pièce intermédiaire (7) en matériau rétractable sous l'action de la chaleur.

2. Dispositif selon la revendication 1,
caractérisé en ce que
la pièce intermédiaire rétractable (7), de l'élément de liaison (3) a la forme d'une bande bordant périphériquement la vitre de fenêtre (1).

3. Dispositif selon la revendication 1 ou 2,
caractérisé en ce que
l'élément de liaison (3) comprend une première bande profilée (5) en matière plastique, en prise sur le bord de la vitre de fenêtre et une seconde bande profilée (6) en matière plastique qui peut être reliée solidement à la capote (2), la pièce intermédiaire (7) en matériau rétractable, se trouvant entre la première et la deuxième bande profilée (5, 6).

4. Dispositif selon la revendication 3,
caractérisé en ce que
la pièce intermédiaire (7) est cousue sur les deux bandes en matière plastique (5, 6).

5. Dispositif selon la revendication 3,
caractérisé en ce que
la pièce intermédiaire (7) est, par l'intermédiaire de bandes en feutre (8), soudée à haute fréquence aux deux bandes profilées en matière plastique (5, 6).

6. Dispositif selon une des revendications 3 à 5,
caractérisé en ce que
la seconde bande profilée en matière plastique (6) est constituée de deux bandes profilées en crochet (9, 10) en prise l'une dans l'autre tout en assurant ainsi une fixation amovible, la première bande profilée (9) étant rendue solidaire du matériau (4) de la capote tandis que la seconde bande profilée (10) est rendue solidaire de la pièce intermédiaire (7).

7. Dispositif selon la revendication 6,
caractérisé en ce que
la première bande profilée en crochet (9) est rendue solidaire du matériau (4) de la capote par soudure à haute fréquence.

8. Dispositif selon la revendication 6,
caractérisé en ce que
la première bande profilée en crochet (9) est cousue sur le matériau (4) de la capote.

9. Dispositif selon la revendication 7 ou 8
caractérisé en ce que
sur le matériau (4) de la capote, au-dessus de la zone de liaison, est réalisée une soudure d'application (12).

10. Dispositif selon une des revendications 1 à 9,
caractérisé en ce que
le bord (11) du matériau (4) de capote délimitant l'ouverture de fenêtre est collé sur la vitre de fenêtre (1).
